# EUROPEAN PATENT SPECIFICATION

(11) **EP 1 825 761 B1**
(45) Date of publication and mention of the grant of the patent: **17.06.2015**
(21) Application number: 05813436.2
(22) Date of filing: 27.10.2005
(51) Int. Cl.: A23K 1/16, A23K 1/18

(54) **WET FEED FOR RUMINANTS AND MONOGASTRICS, OBTAINED BY MIXING LONG CHOPPED FIBRE WITH INDUSTRIAL WASTE OR AGRICULTURAL BY-PRODUCTS**
FLÜSSIGFUTTER FÜR WIEDERKÄUER UND MONOGASTRISCHE TIERE, DAS DURCH VERMISCHEN VON LANGEN GESCHNITTENEN FASERN MIT INDUSTRIEABFALL ODER LANDWIRTSCHAFTLICHEN NEBENPRODUKTEN ERHALTEN WIRD
ALIMENT HUMIDE POUR ANIMAUX DESTINE A L'ALIMENTATION DES RUMINANTS ET DES MONOGASTRIQUES OBTENU PAR MELANGE DE FIBRES LONGUES ET HACHEES AVEC DES RESIDUS INDUSTRIELS OU DES SOUS-PRODUITS AGRICOLES

(30) Priority: 19.11.2004 ES 200402791
(43) Date of publication of application: 29.08.2007
(73) Proprietor: Aspero, S.A., 41011 Sevilla (ES)
(72) Inventor: MELGAREJO PIÑAR, Jaime, E-41011 Sevilla (ES)
(74) Representative: Ungria López, Javier
(86) International application number: PCT/ES2005/000579
(87) International publication number: WO 2006/056628

(56) References cited:
- WO-A1-80/01351
- ES-A1- 2 069 498
- GB-A- 1 223 940
- US-A- 3 692 530
- US-A- 4 357 358
- US-A- 5 312 632
- OOMEN, G.J.M., VERSCHUUR, C.M., AND SCHIERE, J.B.: "DIGESTION VERSUS COMPOSTING OF STRAW AND HAY: EFFECTS ON COMPOSITION OF BIOMASS RESIDUES" NETHERLANDS JOURNAL OF AGRICULTURAL SCIENCE., vol. 43, 1995, pages 313-319, XP002552482 WAGENINGEN ISSN: 0028-2928
- HUNT, C.W., PATERSON, J.A., ZINN, G.M., AND WILLIAMS, J.E.: "Effect of partzicle length and sodium hydroxide treatment of wheat straw on site and extent of digestion by lambs" JOURNAL OF ANIMAL SCIENCE, vol. 58, 1984, pages 1454-1460, XP002552483 USNEW YORK, NY ISSN: 0021-8812
- DATABASE WPI Week 199244 Thomson Scientific, London, GB; AN 1992-364032 XP2011390 & SU 1 701 240 A1 (KISH AGRIC INST) 30 December 1991 (1991-12-30)

## Description

### TECHNICAL FIELD OF THE INVENTION

The invention belongs to the field of feeds destined for ruminants and monogastrics.

### STATE OF THE PRIOR ART OF THE INVENTION

Vegetable fibres are essential in the food supply of ruminants and certain monogastric animals, due to which every ration or feed must contain a minimum of fibre, part of which (more than 30%) must necessarily be long fibre (greater than 3 cm in length). In farming, the stalks of grasses or legumes and straw from cereals are used as food since they contribute fibre. They are used as the food on their own or supplemented, mainly with concentrates or other raw materials.

Cereal straw is the residue from crops which is gathered and left on the ground and then, after baling, is used for beds or as a filling feed or as true feed for ruminants. In the state that it is gathered, it has a very low nutritive capacity, containing 3.6% of protein, of zero or even negative digestibility, 1.3% of fats, 36.2% of nitrogen-free extracts and 39.2% of raw fibre. The energy it contains is just 0.18 UFL (milk foraging units), 0.15 UFC (meat foraging units). Straw consists of the stalks and leaves of plants which, in order to mature, give up almost all their nutrients for the formation of seeds, leaving dry and highly lignified plant fibres as a residue. By its nature, this residue, which is virtually useless for animal food, contains in its chemical composition some very appreciable nutrients with an important energy content which, on account of their physical structure and after being coated with a layer of lignin, are not suitable for being properly digested by animals. This residue contains 75% of hemicellulose and cellulose, which, when completely digested, provide 2,400 kcal per kg, the same as that provided by starches when digested. Lignin, which is totally indigestible, forms just 12% of straw, but it is chemically bonded to the cellulose via some very strong hydrogen bridges, and located in the form of a shield which protects the rich nutrients it contains, rendering them incapable of being digested, in such a way that animals fed solely on straw would lose weight and end up by dying of starvation. The capacity of the straw for being voluntarily ingested by the animals is very low, 4 kg of dry matter (DM) per day for a cow with a live weight of 600 kg, or 500 grams for a sheep weighing 60 kg, and from when it is ingested until it disappears from the rumen, a digestion period of 5 days passes.

The purpose of the invention is to overcome the obstacles preventing cereal straw, on account of its physical structure mentioned above, from being able to be used as a central component in the food of ruminants.

Thanks to the special configuration of their stomachs, and to the symbiotic collaboration of a powerful ruminal microbial flora, ruminants degrade these compounds down to assimilable nutrients, which very much increases their value as food. But, in order to achieve this, some prior conditioning is necessary for the straw and quality proteins need to be incorporated, a minimum of 90 grams per kg of dry matter. In polygastrics, this protein makes it possible for a powerful cellulolytic flora to grow in the interior of the rumen, which will provide a better utilisation of the potential energy contained in this food. The ruminal flora and that contained in the hay produces a specific enzyme which digests the cellulose, but this enzyme is not diluted in the liquid of the medium and instead the external membrane of the bacteria needs to be in intimate contact with the cellulose so that the latter can be digested.

Straw has a very woody, dry and leathery structure, which makes it difficult to crush, masticate and mix with saliva in order to form a food bolus, which reduces its capacity for being consumed. Since the digestion time becomes extended and the rumination becomes more difficult, so the stomach remains full for a long time, which prevents the animal from being able to eat more, which reduces its capacity to consume.

As mentioned earlier, in order for the cellulose to be degraded by the specific enzyme, the external membrane of the bacteria forming the ruminal flora needs to be in intimate contact with the cellulose, which means that the attack surface for the straw needs to be made as large as possible by means of chopping and lacerating it. This chopping has to be sufficient for facilitating the attack by the flora, but not for converting the long fibre of the straw into short fibre for the ruminants. The reason is that, in order to extend the digestion time and so that nutrients do not escape from the rumen towards the intestines without being digested, the size of the fibre needs to be no less than three centimetres in length, but no greater than from 6 to 15 cm. So, a worked mass of long fibre is formed which prevents small size nutrients from rapidly escaping so that they can be subjected to microbial attack during the ruminal digestion for a sufficient length of time. In this way, the animals can duplicate the consumption of food, with less time0 for mastication and ruminating, with which the straw can provide from 0.40 UFL to 0.45 UFL, or from 0.36 UFC to 0.40 UFC, for digestion, which means that the energy utilisation of its dry matter is being doubled. And as the voluntary ingestion is also doubled, favoured by the degree of moisture and the size of the fibre, the result is that the animals manage to balance out their needs in terms of maintenance, gestation and moderate productions.

Different wet feeds for ruminants and processes for obtaining thereof are disclosed in the prior art. For instance, Oomen, G.J.M. et al. (Digestion versus composting of straw and hay: Effects on composition of biomass residues". Netherlands Journal of Agricultural Science, 43, 1995: 313-319) compare the digestion process of ruminants with a composting process of straw in open backets, which comprises chopping the straw in a length of 8-10 cm, and adding a source of protein (compost), the product having a moisture content of c.72%.

Hunt et al. (Effect of particle length and sodium hydroxide treatment of wheat straw on site and extent of digestion by lambs. Journal of Animal Science, 58, 1984: 1454-1460) define a composition for feeding to ruminants obtained by a process which comprises chopping straw having a length of 10 cm., the final composition having a moisture of c.60%; separately, an additional supplement composition comprising proteins is given to the livestock.

Patent application SU 1701240 A1 discloses a method for obtaining products suitable for feeding to ruminants, said method comprising chopping vine stems to a size of between 1-4 cm. and adding a source of protein together with additives for decomposing the fibre, the product having a moisture content of 60-70%. A two-stage sterilisation step in autoclave, an inoculation step with strain of wood-decomposing fungi, and an incubation step are carried out for obtaining the process.

US Patent 5,312,632 describes both aerobic and anaerobic fermentation methods for obtaining wet fodder, said methods comprising cutting and pressing pieces of leaves of water hyacinths to a size of between 4-6 cm., and adding a source of protein together with additional additives for decomposing the fibre.

US Patent 3,692,530 discloses neutral animal feed prepared from agricultural wastes (straw) treated with steam under superatmospheric pressure, the fibre having a length of 10 cm., the product being mixed with sufficient alkaline potato peelings as additional source of proteins, and the moisture content being of 80%. A similar wet animal feedstuff having a length of between 1-16 cm is described in US 4,357,358, the process for obtaining thereof comprising a mixing step of fibrous agricultural by-product such a straw with protein-enriched residues such as milk solids; drying the mixture and compressing the same.

With the aim of improving the efficiency of cereal straw, use has been made of industrial waste and agricultural by-products, whose protein and energy contributions, mixed with the straw, improve its digestibility and energy yield.

The product prepared by the silaging process disclosed in claim 1 can be used as a sole feed for maintenance and moderate productions, or they can be supplemented with concentrates, in the event that the nutritive requirements are very high, though at all times with a saving in concentrates and a reduction in the production cost.

### OBJECT OF THE INVENTION

The object of the present invention is a process for preparing a wet feed which is intended for ruminants and mongastrics, according to claim 1. As a result, the obtained composition consists of fibre chopped and lacerated by an industrial process, with a maximum size of 15 cm in length, mixed with industrial waste such as yeast or brewers' grains or citrus pulps or agricultural by-products, such as rejected peppers or tomatoes, and with a degree of moisture of between 35% and 80%.

### DETAILED DESCRIPTION OF THE INVENTION

The present invention relates to a process for obtaining feed for ruminants and monogastrics, characterised in that it comprises:
- chopping fibre to a size of between 3 cm and 15 cm,
- lacerating that fibre,
- raising the degree of moisture up to between 35% and 80%,
- adding a source of protein, and
- silaging of the feed for its later conservation.
The obtained product consists of fibre chopped and lacerated with a length of between 3 cm and 15 cm, a source of protein, and in that it possesses a degree of moisture of between 35% and 80%.

In a preferred embodiment of said process, the fibre is chopped to a length of between 3 cm and 6cm. In another preferred embodiment, the degree of moisture is raised to between 40% and 60%.

Additionally said process comprises adding a source of quality protein, selected from among industrial waste or cereals, agricultural by-products and mixtures thereof. Among the industrial waste can be used waste from the brewing industry such as brewers' grains, yeast culture for brewing, or mixtures thereof. Among the agricultural by-products, those selected from among citrus pulp, grape, rejected vegetables, by-products of beet, and mixtures thereof, are preferably used. As a source of quality protein, rejected peppers or tomatoes and mixtures thereof can also be used.

A preferred embodiment of the process allows the obtaining of a feed for ruminants characterised in that it comprises:
- 30% of wheat straw of a size between 3 cm and 15 cm,
- 30% of brewers' grains,
- 30% of citrus pulp,
- 10% of brewers' yeast.

In another preferred embodiment of the process, the obtained feed for ruminants is characterised in that it comprises:
- 15% of wheat straw of a size between 3 cm and 15 cm,
- 85% of brewers' grains,

In another preferred embodiment of the process, the obtained feed for ruminants is characterised in that it comprises:
- 30% of wheat straw of a size between 3 cm and 15 cm,
- 40% of brewers' grains,
- 30% of sugar beet.

In another preferred embodiment of the process, the obtained feed for ruminants is characterised in that it comprises:
- 33% of wheat straw of a size between 3 cm and 15 cm,
- 34% of brewers' yeast,
- 33% of brewers' grains.

Basically, the claimed method for preparing the described feed is characterised in that it comprises chopping the fibre until a size of between 3 cm and 15 cm is obtained, lacerating that fibre, taking it to a degree of moisture of between 35% and 80% and adding a source of quality protein as described earlier. As stated above, in a preferred embodiment, the method includes chopping the fibre until a size of between 3 cm and 6 cm is obtained. In another embodiment, the method forming the object of the present invention is characterised in that the degree of moisture is raised to between 40% and 60%.

### MODE OF EMBODIMENT OF THE INVENTION

The present invention is furthermore illustrated by means of the following examples intended as illustration rather than limiting the invention.

### EXAMPLE 1

Taking as point of reference a cow with a live weight of 500 kg, this example illustrates the yield obtained by means of the digestion of the feed prepared in three different ways, as described below.

In the following table the first column contains the name of the energy and protein nutrients. The second contains the quantities by which the metabolic weight (mw) of the animal has to be multiplied (105.07 which is mw 0.75 of a beef cow with a live weight of 500 kg) in order to learn the energy and protein necessities for strict maintenance, in other words, in order not to gain or lose weight. The third column is the expression of these needs for the said animal with a live weight of 500 kg. The fourth column expresses the nutrients provided by the cereal straw as such. The fifth, those provided by the following formula: 33% straw, 34% brewers' yeast and 33% brewers' grains, without the straw having been previously treated by means of the industrial process of chopping and lacerating. The sixth is the same formula with the straw subject to the chopping and lacerating process.

| Nutrient, name | mw 0.75 cow of live weight 500 kg 105.7x | needs of cow of live weight 500 kg | column 4 long straw on its own | column 5 long straw mixed | column 6 long straw chopped and mixed |
|---|---|---|---|---|---|
| UFL | 0.036x | 3.78 | 0.67 | 2.30 | 4.82 |
| Digestible energy (kcal) | 130x | 13,659 | 2,713 | 9,182 | 17,470 |
| Metaboliza ble energy (kcal) | 106.5x | 11,190 | 2,336 | 7,780 | 14,753 |
| Net milk energy (kcal) | 62.23 | 6,538 | 1,175 | 4,468 | 8,434 |
| Digestible protein (g) | | 335 | 22.6 | 345 | 573 |
| PDI | | 370 | 7.6 | 390 | 608 |
| voluntary ingestion of dry matter | | | 3.467 | 4.728 | 7.355 |

| | | | | | |
|---|---|---|---|---|---|
| values calculated on the basis of data published by the Fundacion Espanola de Nutrici6n Animal FEDNA (Spanish Foundation for Animal Nutrition) PDI: intestinal digestible protein | | | | | |

Column 2 states the quantities to be multiplied by 105.07 which presents the metabolic weight of the problem cow, and has been obtained from "Ruminant feeds" of the I.N.R.A. (Institut National de Recherche Agronomique).

In column 3, needs, the data comes from multiplying the figures of column 2 by 105.07 which is the metabolic weight of the cow.

Column 4 corresponds to the composition of the dry matter (DM) of cereal straw, which is incorporated into this work, multiplying the respective nutrients by 3.46 kg of voluntary ingestion (33 grams of dry matter per kg of mw 0.75).

Column 5 corresponds to the same straw as that of column 4, to which a sufficient quantity of protein has been added in order to permit a good growth of the ruminal flora, which, due to increasing the digestibility of the dry matter, produces an increase in energy and in digestible protein, bearing in mind that the increase in consumption goes to 4.728 kg of dry matter.

Column 6 corresponds to the energy and protein values of the dry matter with the same components as the previous column, following the process of chopping and lacerating the straw. The quantitative and qualitative improvements are striking. Ingestion goes from 4.728 kg to a new figure of 7.355 kg and the energy values per kg of straw ingested are significantly improved.

### EXAMPLE 2

This example contains four standard formulas, prepared with the energy values of the dry matter of unchopped long straw (Nos. 5 to 8), and together with them other formulations with exactly the same composition of raw materials by evaluated with the straw industrially chopped and lacerated (Nos. 9 to 12).

The composition of the formulas is as follows:

| | | |
|---|---|---|
| No. 5: | long wheat straw, unchopped | 30% |
| | brewers' grains (25% DM) | 30% |
| | citrus pulp (18% DM) | 30% |
| | brewers' yeast (12% DM) | 10% |

This formula is equivalent to No. 9 but it contains chopped and lacerated straw.

| | | |
|---|---|---|
| No. 6: | long wheat straw, unchopped | 15% |
| | brewers' grains | 85% |

This formula is equivalent to No. 10 but it contains chopped and lacerated straw.

| | | |
|---|---|---|
| No. 7: | long wheat straw, unchopped | 30% |
| | brewers' grains | 40% |
| | sugar beet | 30% |

This formula is equivalent to No. 11 but it contains chopped and lacerated straw.

| | | |
|---|---|---|
| No. 8: | long wheat straw, unchopped | 33% |
| | brewers' yeast | 34% |
| | brewers' grains | 33% |

This formula is equivalent to No. 12 but it contains chopped and lacerated straw.

| Nutrien ts in the DM | long straw | chopped straw | long straw | chopped straw | long straw | chopped straw | long straw | chopped straw |
|---|---|---|---|---|---|---|---|---|
| | No. 5 | No. 9 | No. 6 | No. 10 | No. 7 | No. 11 | No. 8 | No. 12 |
| UFL (kg) | 0.43 | 0.59 | 0.56 | 0.66 | 0.47 | 0.61 | 0.39 | 0.55 |
| UFC | 0.40 | 0.51 | 0.50 | 0.57 | 0.43 | 0.53 | 0.35 | 0.46 |
| Digesti ble energy (kcal) | 1,680 | 2,127 | 2,089 | 2,401 | 1,742 | 2,205 | 1,450 | 2,008 |
| Metabol ic energy (kcal) | 1,359 | 1,777 | 1,793 | 2,044 | 1,408 | 1,795 | 1,253, | 1,720 |
| N. energy mm (kcal) | 837 | 1,119 | 1,040 | 1,217 | 827 | 1,088 | 757 | 1,060 |
| ENL | 778 | 1,039 | 1,051 | 1,207 | 789 | 1,030 | 703 | 984 |
| ENC | 514 | 600 | 628 | 675 | 543 | 613 | 507 | 589 |
| % raw protein | 9.58 | = | 17.58 | = | 9.09 | = | 12.43 | co |
| % digesti ble protein | 5.83 | = | 12.79 | = | 5.58 | = | 8.33 | = |
| PDIE | 8.34 | = | 13.71 | = | 8.29 | = | 9.55 | = |
| PDIN | 6.83 | = | 13.58 | = | 6.85 | = | 8.91 | = |
| % soluble protein | 3.78 | = | 10.26 | = | 4.04 | = | 4.38 | = |
| % degradable protein | 5.96 | = | 14.13 | = | 5.67 | = | 7.06 | = |

| | | | | | | | | |
|---|---|---|---|---|---|---|---|---|
| Values calculated on the basis of data published by the Fundación Espafiola de Nutrición Animal FEDNA (Spanish Foundation for Animal Nutrition) UFL: Milk foraging units UFL: Meat foraging units N. Energy mm: net energy for maintenance of the meat ENL: Net milk energy ENC: Net meat energy PDIE: Energy coming from intestinal digestible protein PDIN: Nitrogen coming from intestinal digestible protein | | | | | | | | |

In this table, the enormous increase in energy values of conditioned straw compared to straw without any treatment can be confirmed. This increase is of the order of 20% to 30% or somewhat more, in all the energy values. The protein values do not vary because the level of protein incorporated in order to achieve this growth has not been evaluated.

If it is borne in mind that the capacity for voluntary ingestion of dry matter is also duplicated, then the animals more than meet their energy needs. Let us assume that a beef cow with a live weight of 600 kg needs 3.8 UFL for its maintenance. Its ingestion capacity for untreated straw is 4 kg, which at 0.18 UFL/kg, signifies that it just obtains 0.72 UFL for its maintenance. It loses weight and ends up by dying. Nevertheless, if the nutritive value of the treated straw is 0.39 UFL and it consumes 8 kg, just from treated straw it ingests 3.12 UFL, and in these calculations the energy contributions from the added protein have not been taken into account. The animal therefore more than meets its maintenance needs.

## Claims

1. Process for preparing a feed for rumiants and monogastrics, **characterised in that** it comprises:
- chopping fibre to a size of between 3 cm and 15 cm,
- lacerating that fibre,
- raising the degree of moisture up to between 35% and 80%,
- adding a source of protein, and
- silaging of the feed for its later conservation

2. Process for preparing a feed according', to claim 1, **characterised in that** it comprises chopping the fibre to a length of between 3 cm and 6 cm.

3. Process for preparing a feed according to claim 1, **characterised in that** the degree of moisture is raised to between 40% and 60%.

4. Process for preparing a feed according to claim 1, **characterised in that** it comprises a source of protein selected from among industrial waste or cereals, agricultural by-products and mixtures thereof.

5. Process for preparing a feed according to claim 4, **characterised in that** said waste is waste from the brewing industry.

6. Process for preparing a feed according to claim 5, **characterised in that** said waste is selected from between brewers' grains, yeast culture for brewing, and mixtures thereof.

7. Process for preparing a feed according to claim 4, **characterised in that** said agricultural by products are selected from among citrus pulp, grape, rejected vegetables, by-products of beet, and mixtures thereof.

8. Process for preparing a feed according to claim 7, **characterised in that** said agricultural by-products are selected from between rejected peppers or tomatoes and mixtures thereof.

## Patentansprüche

1. Verfahren zum Herstellen eines Futters für Wiederkäuer und Monogastrier, **dadurch gekennzeichnet, dass** es umfasst:
- Häckseln von Fasern auf eine Größe zwischen 3 cm und 15 cm,
- Aufreißen dieser Fasern,
- Erhöhen des Feuchtigkeitsgrades auf zwischen 35 % und 80 %,
- Zugeben einer Proteinquelle, und
- Silieren des Futters für seine spätere Konservierung.

2. Verfahren zum Herstellen eines Futters nach Anspruch 1, **dadurch gekennzeichnet, dass** es das Häckseln der Fasern auf eine Länge zwischen 3 cm und 6 cm umfasst.

3. Verfahren zum Herstellen eines Futters nach Anspruch 1, **dadurch gekennzeichnet, dass** der Feuchtigkeitsgrad auf zwischen 40 % und 60 % erhöht wird.

4. Verfahren zum Herstellen eines Futters nach Anspruch 1, **dadurch gekennzeichnet, dass** es eine Proteinquelle, ausgewählt aus Industrieabfällen oder Getreide, landwirtschaftlichen Nebenprodukten und Mischungen davon, umfasst.

5. Verfahren zum Herstellen eines Futters nach Anspruch 4, **dadurch gekennzeichnet, dass** die Abfälle Abfälle aus der Brauindustrie sind.

6. Verfahren zum Herstellen eines Futters nach Anspruch 5, **dadurch gekennzeichnet, dass** die Abfälle ausgewählt sind aus Biertreber, einer Hefekultur zum Brauen und Mischungen davon.

7. Verfahren zum Herstellen eines Futters nach Anspruch 4, **dadurch gekennzeichnet, dass** die landwirtschaftlichen Nebenprodukte ausgewählt sind aus Citruspulpe, Trauben, Gemüseabfällen, Nebenprodukten von Rüben und Mischungen davon.

8. Verfahren zum Herstellen eines Futters nach Anspruch 7, **dadurch gekennzeichnet, dass** die landwirtschaftlichen Nebenprodukte ausgewählt sind aus Paprika- oder Tomatenabfällen und Mischungen davon.

## Revendications

1. Procédé de préparation d'un aliment pour ruminants et monogastriques, **caractérisé en ce qu'**il comprend :
- la coupe de fibre à une dimension entre 3 cm et 15 cm,
- la lacération de cette fibre,
- l'élévation du degré d'humidité jusqu'à entre 35 % et 80 %,
- l'addition d'une source de protéine, et
- l'ensilage de l'aliment pour sa conservation ultérieure.

2. Procédé de préparation d'un aliment selon la revendication 1, **caractérisé en ce qu'**il comprend la coupe de la fibre à une longueur entre 3 cm et 6 cm.

3. Procédé de préparation d'un aliment selon la revendication 1, **caractérisé en ce que** le degré d'humidité est élevé jusqu'à entre 40 % et 60 %.

4. Procédé de préparation d'un aliment selon la revendication 1, **caractérisé en ce qu'**il comprend une source de protéine choisie parmi des déchets industriels ou des céréales, des produits secondaires de l'agriculture et des mélanges de ceux-ci.

5. Procédé de préparation d'un aliment selon la revendication 4, **caractérisé en ce que** ledit déchet est un déchet provenant de l'industrie brassicole.

6. Procédé de préparation d'un aliment selon la revendication 5, **caractérisé en ce que** ledit déchet est choisi parmi des drêches de brasserie, une culture de levure pour brasserie, et des mélanges de ceux-ci.

7. Procédé de préparation d'un aliment selon la revendication 4, **caractérisé en ce que** lesdits produits secondaires de l'agriculture sont choisis parmi de la pulpe d'agrumes, du raisin, des légumes rejetés, des produits secondaires de betterave, et des mélanges de ceux-ci.

8. Procédé de préparation d'un aliment selon la revendication 7, **caractérisé en ce que** lesdits produits secondaires de l'agriculture sont choisis parmi des poivrons ou des tomates rejetés et des mélanges de ceux-ci.
